# EUROPÄISCHE PATENTSCHRIFT

(11) **EP 2 066 572 B1**
(45) Veröffentlichungstag und Bekanntmachung des Hinweises auf die Patenterteilung: **29.02.2012**
(21) Anmeldenummer: 07786325.6
(22) Anmeldetag: 25.07.2007
(51) Int. Cl.: B65G 15/36

(54) **FÖRDERGURT MIT QUERARMIERUNG**
CONVEYING BELT WITH TRANSVERSE REINFORCEMENT
COURROIE DE TRANSPORT AVEC ARMATURE TRANSVERSALE

(30) Priorität: 20.09.2006 DE 102006044110
(43) Veröffentlichungstag der Anmeldung: 10.06.2009
(73) Patentinhaber: Phoenix Conveyor Belt Systems GmbH, 07422 Bad Blankenburg (DE)
(72) Erfinder: KÜSEL, Bernd, 21077 Hamburg (DE)
(74) Vertreter: Finger, Karsten
(86) Internationale Anmeldenummer: PCT/EP2007/006600
(87) Internationale Veröffentlichungsnummer: WO 2008/034483

(56) Entgegenhaltungen:
- EP-A- 0 753 471
- DE-C- 966 979
- DE-U- 1 982 374

## Beschreibung

Die Erfindung betrifft einen Fördergurt aus einem elastomeren Werkstoff in Form einer vulkanisierten Kautschukmischung mit einer Tragseite für das Fördermaterial sowie einer Laufseite, wobei der Fördergurt einen eingebetteten Festigkeitsträge aus Stahlseilen, die in Fördergurtlängsrichtung verlaufen, sowie eine ebenfalls eingebettete Querarmierung aufweist, wobei die Querarmierung ein mit Hilfsfäden versehenes cordgewebe ist.

Ein Fördergurt mit stahlseilen und einer Querarmierung wird insbesondere in folgenden Druckschriften detailliert beschrieben:
DE 25 20 943 A1 (D1)
DE 25 32 190 A1 (D2)
DE 38 01 120 A1 (D3)
DE 43 33 839 A1 (D4)
DE 44 36 042 A1 (D5)
EP 0 336 385 A1 (D6)
EP 0 753 471 A1 (D7)

Als Festigkeitsträger kommen in Fördergurtlängsrichtung verlaufende Seile oder Corde aus Stahl oder Aramid zum Einsatz, wobei Seile bzw. Corde aus Stahl von besonderer Bedeutung sind (St-Gurte). Der Festigkeitsträger kann aber auch ein Gewebe sein, beispielsweise ein Polyester-Polyamid-Gewebe. Die Querarmierung, die insbesondere in Verbindung mit St-Gurten Verwendung findet und vorrangig dem Schlitzschutz dient, besteht zumeist aus Synthesecorden, insbesondere wiederum aus Polyamidcorden. Diese Corde haben eine hohe Festigkeit und zugleich eine hohe Dehnfähigkeit. Durch diese Eigenschaften werden in den Fördergurt eingedrungene Fremdkörper stark an der Schlitzung behindert, weil die Quercorde dank ihrer hohen Dehnbarkeit zusammengedrückt werden und somit den Widerstand erheblich erhöhen. Im Idealfall wird der Fremdkörper sogar herauskatapultiert.

Nach dem Stand der Technik sind folgende beiden Varianten der Querarmierung bekannt:
- Einzelcorde (D1 bis D6);
- Cordgewebe (D3, D7), d.h. Corde mit Hilfsfäden in Kettrichtung.

Der Nachteil einer nichtverwebten, aus Einzelcorden bestehenden Querarmierung ist die aufwendige Verarbeitbarkeit.

Wesentlich günstiger ist es, ein Cordgewebe (Flächengewebe) in den Fördergurt zu konfektionieren. Allerdings werden die Querarmierungscorde eines Flächengewebes in ihrer Funktion, also der hohen Dehnbarkeit bzw. Kumulierung der Widerstandskraft behindert, und zwar im Gegensatz zu Einzelcorden.

In der Gebrauchsmusterschrift 1 982 374 U wird ein Förderband bzw. Treibriemen mit einem zugfesten Kern (Festigkeitsträger) aus mehreren, durch thermoplastischen Kunststoff bzw. Kautschuk verbundenen Gewebeeinlagen beschrieben. Die Gewebeeinlagen weisen in den Randbereichen Kettfäden aus einem mit dem thermoplastischen Kunststoff verschmelzbaren bzw. mit dem Kautschuk homogen verbindbaren Fadenmaterial auf, die mit dem thermoplastischen Kunststoff bzw. dem Kautschuk und gegebenenfalls mit dem Deckplattenmaterial zu einer einheitlichen Masse verschmolzen sind, während die Schussfäden mit ihren Enden in der verschmolzenen Masse eingebettet sind. Auf diese Weise soll verhindert werden, dass die Gewebeeinlagen an den Längskanten des Förderbandes bzw. Treibriemens durch mechanische Einwirkung beschädigt werden und mit der Zeit aufblättern.

In der Patentschrift DE 966 979 C wird ein Verfahren zur Herstellung von aus Metalldrähten und Gummi oder sonstigen hochelastischen Stoffen als Hüllstoff zusammengesetzten Gegenständen, beispielsweise Förderbänder, vorgestellt. Diese Metalldrähte werden als im Abstand voneinander angeordnete, in Längsrichtung verlaufende Einzelpaare in den Hüllstoff eingebettet, wobei lediglich die paarweise zusammengehörenden Drähte durch dauernde oder nur zeitweise bestehende Verbindungen in den Näherungspunkten zusammengefügt werden.

Die Aufgabe wird mit dem Fördergurt gemäß Patentansprunch 1 gelöst.

Die Hilfsfäden bestehen insbesondere aus einem Kunststoff, der sich durch Trennen und/oder Schmelzen und/oder Zersetzen auflöst. In diesem Zusammenhang ist der Kunststoff vorzugsweise ein Copolyamid oder Copolyester. Diese Kunststoffe können als Trenn-oder Klebegarne ausgebildet sein, so dass zunächst eine Trennung erfolgt, verbunden mit einer anschließenden Auflösung der Fadenbruchstücke durch Schmelzen und/oder Zersetzen.

Die Auflösung beginnt dabei bereits in einem Temperaturbereich von 100 bis 130°C. Da Fördergurte in der Regel bei etwa 145 bis 160°C vulkanisiert werden, sind nach Beendigung der Vulkanisation die Hilfsfäden des ursprünglich eingesetzten Gewebes vollständig aufgelöst., so dass die dann übrig bleibenden Einzelcorde ihre Funktion uneingeschränkt erfüllen können.

Die Erfindung wird nun anhand von Ausführungsbeispielen unter Bezugnahme auf schematische Zeichnungen erläutert. Es zeigen:
- Fig. 1: den Querschnitt eines St-Gurtes mit Querarmierung, in den ein gurtschlitzender Fremdkörper eingedrungen ist;
- Fig. 2: ein Cordgewebe in Wechselwirkung mit einem eingedrungenen Fremdkörper;
- Fig. 3: eine Cordgewebekonstruktion mit Hilfsfäden;
- Fig. 4: Einzelcorde, die nach Auflösen der Hilfsfäden als Querarmierung wirken.

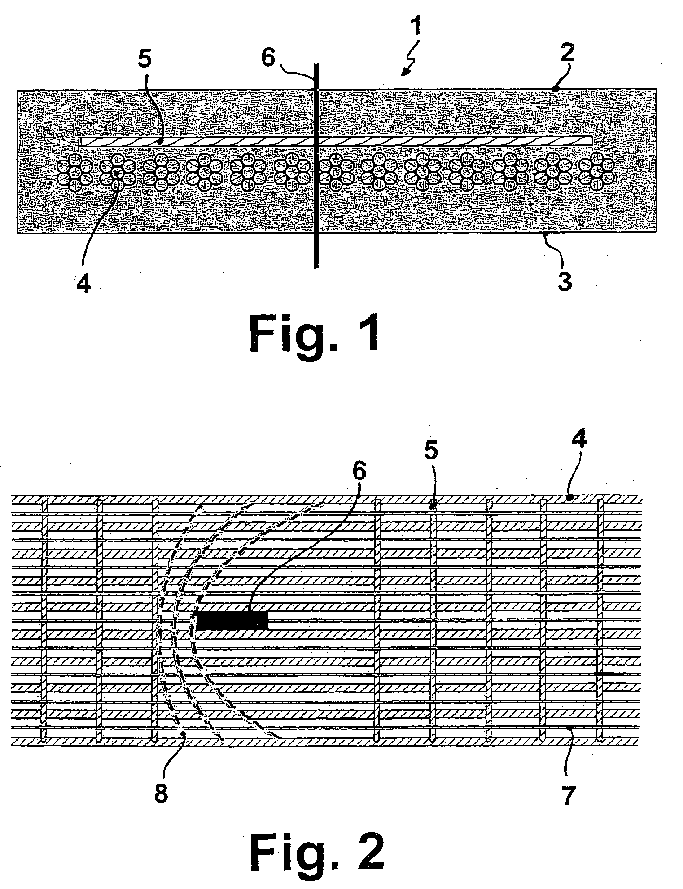

Fig. 1 zeigt einen Fördergurt 1 mit einer Tragseite 2 für das Fördermaterial sowie einer Laufseite 3 mit Kontakt zu den Tragrollen und Trommeln (Antriebs-, Umkehr- und Umlenktrommel). Der Fördergurt besteht aus einem elastomeren Werkstoff in Form einer vulkanisierten Kautschukmischung (z.B. Chloroprenkautschuk). In den Fördergurt eingebettet sind Stahlseile 4, die in Fördergurtlängsrichtung verlaufen und als Festigkeitsträger dienen. Ebenfalls in den Fördergurt eingebettet ist eine Querarmierung 5 aus Synthesecorden (z.B. Polyamidcorden), die zur Tragseite hin angeordnet ist und sich im Wesentlichen über die gesamte Festigkeitsträgerbreite erstreckt.

In den Fördergurt 1 ist nun ein gurtschlitzender Fremdkörper 6 eingedrungen, dessen Wechselwirkung mit der Querarmierung 5 nun näher erläutert wird.

Fig. 2 zeigt das in den Fördergurt eingebettete Gesamtsystem aus Stahlseilen 4 und Querarmierung 5 in Form eines Cordgewebes, umfassend die in regelmäßigen Abständen parallel verlaufenden Quercorde 5 und die in Fördergurtlängsrichtung verlaufenden Hilfsfäden 7. In dem Bereich, wo nun der gurtschlitzende Fremdkörper 6 eingedrungen ist, erfolgt eine Dehnung der Quercorde 8 (gestrichelte Linienführung). Die Dehnbarkeit der Querarmierung ist insofern wichtig, da hiermit der Widerstand gegen den Fremdkörper erhöht wird. Im Idealfall wird der Fremdkörper aus dem Fördergurt herauskatapultiert. Im Falle des Vorliegens eines Cordgewebes mit seinen Konfektionierungsvorteilen minimieren die Hilfsfäden jedoch die gewünschte Dehnbarkeit.

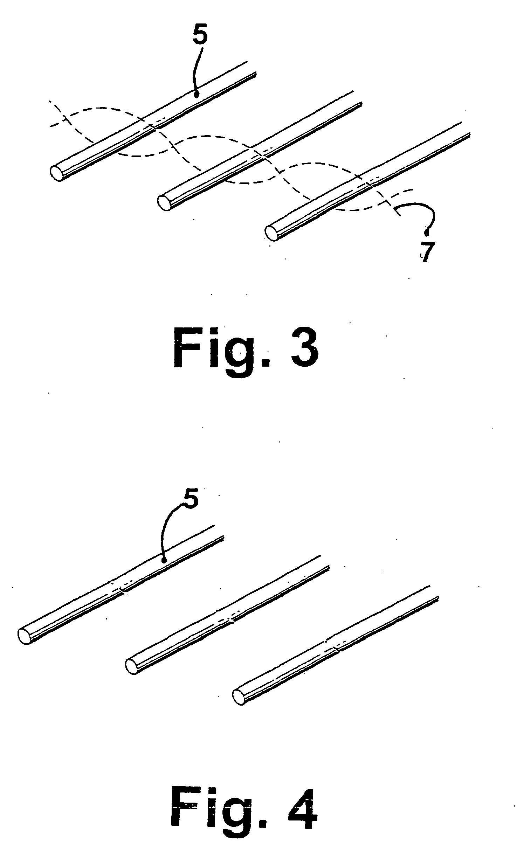

Fig. 3 zeigt ausschließlich das Cordgewebe, umfassend die Quercorde 5 und die Hilfsfäden 7. Die Hilfsfäden sind nun derart beschaffen, dass sich diese unter dem Einfluss der Vulkanisationbedingungen auflösen. Eingesetzt werden dabei entsprechende Kunststoffe, insbesondere auf der Basis von Copolyamiden oder Copolyestern. Die Auflösung erfolgt dabei zunächst durch eine Trennung, insbesondere bei Verwendung von Garnen. Danach erfolgt ein Schmelzen und/oder Zersetzen der Kunststofffäden. Eventuell noch vorhandene Restfäden zersetzen sich schließlich im Bereich der Vulkanisationstemperatur.

Fig. 4 zeigt nun die Querarmierung 5, die nach Auflösen der Hilfsfäden 7 (Fig. 3) als Einzelcorde wirken, verbunden mit einer hohen Dehnbarkeit.

### Bezugszeichenliste

### (Teil der Beschreibung)

- 1: Fördergurt
- 2: Tragseite
- 3: Laufseite
- 4: Festigkeitsträger (Stahlseile)
- 5: Querarmierung (Quercorde)
- 6: gurtschlitzender Fremdkörper
- 7: Hilfsfäden (Kettfäden)
- 8: Querarmierung (Quercorde) unter Fremdkörperbelastung

## Patentansprüche

1. Fördergurt (1) aus einem elastomeren Werkstoff in Form einer vulkanisierten Kautschukmischung mit einer Tragseite (2) für das Fördermaterial sowie einer Laufseite (3), wobei der Fördergurt einen eingebetteten Festigkeitsträger aus Stahlseilen (4), die in Fördergurtlängsrichtung verlaufen, sowie eine ebenfalls eingebettete Querarmierung (5) aufweist, wobei die Querarmierung ein mit Hilfsfäden (7) versehenes Cordgewebe ist, **dadurch gekennzeichnet, dass** das Cordgewebe derart gestaltet ist, dass sich bei der Vulkanisation der Kautschukmischung die Hilfsfäden (7) auflösen, so dass als Querarmierung (5) nur Einzelcorde wirken.

2. Fördergurt nach Anspruch 1, **dadurch gekennzeichnet, dass** die Hilfsfäden (7) aus einem Kunststoff bestehen, der sich durch Trennen und/oder Schmelzen und/oder Zersetzen auflöst.

3. Fördergurt nach Anspruch 2, **dadurch gekennzeichnet, dass** der Kunststoff ein Copolyamid ist.

4. Fördergurt nach Anspruch 2, **dadurch gekennzeichnet, dass** der Kunststoff ein Copolyester ist.

## Claims

1. Conveying belt (1) of an elastomeric material in the form of a vulcanized rubber compound, comprising a carrying side (2) for the material being conveyed and a running side (3), the conveying belt having an embedded strengthening support of steel wires (1), running in the longitudinal direction of the conveying belt, and a likewise embedded transverse reinforcement (5), the transverse reinforcement being a cord fabric provided with auxiliary filaments (7), **characterized in that** the cord fabric is designed in such a way that the auxiliary filaments (7) break up during the vulcanization of the rubber compound, so that only individual cords act as the transverse reinforcement (5).

2. Conveying belt according to Claim 1, **characterized in that** the auxiliary filaments (7) consist of a plastic which breaks up by separating and/or melting and/or decomposing.

3. Conveying belt according to Claim 2, **characterized in that** the plastic is a copolyamide.

4. Conveying belt according to Claim 2, **characterized in that** the plastic is a copolyester.

## Revendications

1. Bande transporteuse (1) en matériau élastomère, présentant la forme d'un mélange de caoutchouc vulcanisé et dotée d'un côté (2) portant le matériau à transporter ainsi que d'un côté d'avancement (3),
la bande transporteuse présentant un renfort incorporé en câbles d'acier (4) qui s'étendent dans le sens de la longueur de la bande transporteuse ainsi qu'une armature transversale (5) également incorporée, l'armature transversale étant un tissu de câbles doté de fils auxiliaires (7),
**caractérisée en ce que**
le tissu de câbles est configuré de telle sorte que lors de la vulcanisation du mélange de caoutchouc, les fils auxiliaires (7) se détachent de telle sorte que seuls des câbles séparés servent d'armature transversale (5).

2. Bande transporteuse selon la revendication 1, **caractérisée en ce que** les fils auxiliaires (7) sont constitués d'une matière synthétique qui se détache par séparation, fusion et/ou décomposition.

3. Bande transporteuse selon la revendication 2, **caractérisée en ce que** la matière synthétique est un copolyamide.

4. Bande transporteuse selon la revendication 2, **caractérisée en ce que** la matière synthétique est un copolyester.
